# EUROPEAN PATENT SPECIFICATION

(11) **EP 2 536 593 B1**
(45) Date of publication and mention of the grant of the patent: **26.08.2015**
(21) Application number: 11744961.1
(22) Date of filing: 02.02.2011
(51) Int. Cl.: B60R 9/058, F16B 2/10, F16B 2/12, B60R 9/055

(54) **FASTENING ASSEMBLY FOR A ROOF BOX**
BEFESTIGUNGSANORDNUNG FÜR EINEN DACHKOFFER
ENSEMBLE DE FIXATION POUR UN COFFRE DE TOIT

(30) Priority: 18.02.2010 SE 1050153
(43) Date of publication of application: 26.12.2012
(73) Proprietor: Mont Blanc Industri AB, 516 90 Dalsjöfors (SE)
(72) Inventor: STERNVING, Björn, S-513 35 Fristad (SE); JOHANSSON, Mattias, S-523 98 Hökerum (SE); LÖVBERG, Peder, S-504 93 Borås (SE)
(74) Representative: Johansson, Lars E.
(86) International application number: PCT/SE2011/050112
(87) International publication number: WO 2011/102780

(56) References cited:
- EP-A1- 1 477 365
- EP-A2- 1 190 906
- DE-T2- 60 308 241
- DE-U1-202005 020 603
- US-A1- 2008 034 561

## Description

### TECHNICAL FIELD

The present invention relates to a fastening assembly for mounting a roof box onto a roof rack of a vehicle, said fastening assembly comprising a housing arranged to be mounted on a roof box, said housing comprising clamping means for clamping said roof box onto said roof rack. The invention also relates to a method for mounting a roof box onto a roof rack.

### BACKGROUND ART

The use of a roof box with a vehicle is a popular and common way of transporting larger amounts of goods than would be possible within the vehicle itself. Generally, the roof box would be fastened onto a roof rack on the roof of the vehicle, although other mountings are also possible.

For security and stability reasons, it is of the utmost importance that the roof box is securely fastened onto the vehicle in order to minimise the risk of accidents or damages to the roof box or the vehicle itself. The fastening must be able to withstand low temperatures and the presence of snow and ice, since a roof box is often used in the wintertime, but must also perform well when the vehicle is moving, at high speed.

Apart from the security and reliability required from the fastening of a roof box, it is also important that the mounting and de-mounting can be performed in an easy and convenient manner without requiring special skills on the part of the user. Also, due to the often low temperatures around the vehicle, it is advantageous to provide a fast ending assembly of a robust construction that can be operated easily without requiring fine motor skills.

One such fastening assembly is provided by EP0754595 (Behringer), where a U-shaped tension bow is inserted to penetrate the base of the roofbox in such a way that the roof rack is held between the bow and the roof box. By operating a lever, a predetermined tension position can be reached, where the bow is secured by a splining arrangement to prevent it from moving from the tension position. This fastening assembly, however, requires a cumbersome mounting in that the U-shaped bow must be inserted manually from underneath the roof rack, and is also not adaptable to different types of roof racks that are generally placed differently on different car types.

EP 1477365, which shows the preamble of claim 1, discloses a holding arrangement having an L-shaped tensioning yoke passing through the floor of a roof box and engaging under the cross member. A locking arm on the support member can be pivoted out through a floor slot to close the open side of the L-shaped clamping yoke and which is locked or unlocked by a clamping lever.

DE60308241 (Seys) discloses another fastening assembly where two clamping agents are made to clamp around a roof rack by operating a screw device that is adjustable for accommodating different roof racks. This mounting process is generally difficult and time consuming, especially where the screw device needs to be operated by hand in cold weather, resulting in possible cold injuries to the person operating it if used without gloves or difficulties in gripping the device if gloves are used. Also, if the device has been subjected to moisture and has frozen in place, a screwing operation may be difficult or altogether impossible before the device has been thawed.

There is therefore a need for an improved fastening assembly.

### DISCLOSURE OF THE INVENTION

The object of the present invention is to eliminate or at least to minimise the problems mentioned above. This is achieved through a fastening assembly for mounting a roof box onto a roof rack according to the preamble of the appended claim 1, wherein clamping means of the fastening assembly comprises at least two jaws wherein at least one of said jaws is arranged to be movable in relation to another jaw and wherein said housing comprises a first interaction section and tightening means that comprises a lever and a first interacting portion that are arranged in such a way that operating said lever creates an interaction of said first interaction portion with said first interaction section. Thereby, one of the jaws can be adjusted to fit roof racks of different types and sizes, and by moving this jaw, a movable jaw, towards the other jaw a tightening grip can be achieved in a secure and convenient manner and a gradual movement of the clamping assembly can be performed in a reliable way, without risking the clamping assembly sliding backwards during or after the movement.

According to an aspect of the invention, said housing is mounted on a holder of said roof box and arranged to be movable in relation to said roof box by means of sliding along said holder. Thereby, the fastening assembly can be adjusted to fit different types of roof racks placed in different ways without requiring cumbersome re-mounting of said roof racks. After placing the roof box onto the roof rack, any adjustments necessary can be performed without lifting the roof box itself, thereby greatly simplifying the process of mounting the box.

According to another aspect of the invention, said holder is a separate component that is arranged to be fixedly mounted on said roof box. Thereby, the fastening assembly and the holder can be mounted on and used with different types of roof boxes without needing the roof box to be adapted for this use by the manufacturer. The user himself or herself can thereby purchase a holder with suitable fixing means and mount this onto a conventional roof box, thus greatly increasing the suitable applications of the fastening assembly according to the invention.

According to a further aspect of the invention, at least one of said jaws is pivot ably mounted onto said housing. Thereby, when adjusting the position of the housing and the jaws with respect to the roof rack, the jaws can be pivoted to allow the housing and jaws to pass a roof rack without the user having to lift the roof box itself to let the jaws pass.

According to yet another aspect of the invention, each of said at least two jaws has an inner surface that is substantially concavely shaped. Thereby, the jaws can envelop the roof rack and establish a firm hold where pressure is applied from each side as well as from underneath and above. The hold from above can be generated by the jaws pressing on the underside of the roof rack, thus effectively squeezing the roof rack between this underside grip and the housing located directly above.

According to a further aspect of the invention, at least one of said jaws is of a shape that is substantially planar and has an end portion arranged to extend to allow an overlap of the ends of two opposing jaws. Thereby, even very small or thin roof racks can be gripped without any of the jaws interfering with the operation of the other.

According to yet another aspect of the invention, said fastening assembly further comprises a clamping assembly that comprises tightening means for moving at least one of said jaws towards the other jaw and locking means for locking said clamping assembly in order to prevent a movement of said clamping assembly in relation to said housing. Thereby, a convenient and secure adjusting, tightening and locking of the clamping assembly, and thereby the jaws, is possible. Since roof boxes are often mounted onto cars in low temperatures where gloves are required for keeping a comfortable body temperature in the hands and where the use of one's hands is often limited by movements that can be performed when very cold, it is especially beneficial that the fastening assembly of the invention does not require fine motor skills, such as those needed for screwing a screw, for instance.

According to yet another aspect of the invention, said housing comprises a second interaction section and said locking means comprises a second interacting portion and where said second interaction section and second interacting portion are arranged to interact in such a way that a locking of said clamping assembly is created, thereby preventing a movement of said clamping assembly in relation to said housing. Thereby, a secure locking in place of the clamping assembly can be achieved without requiring large force for achieving the lock itself. After mounting and during operation of the vehicle with the roof box attached, the roof rack may exert a force on the fastening assembly that strives to loosen the grip, but since this grip will be applied towards the jaws and thereby along the slit 81, and the lock can be loosened only by applying a lifting force in an upwards direction, i.e. orthogonal to the force from the roof rack, the lock can be maintained in a safe and reliable manner.

According to a further aspect of the invention, said holder comprises a slit along which the housing is mounted and said movable clamping assembly comprises a holder body arranged with a support portion arranged to allow said holder body to slide along said slit and also hindering said assembly to move in a transversal direction in relation to said slit. Thereby, a sliding of the clamping assembly along the slit can easily be effected, but at the same time the removal of the clamping assembly from the housing can be prevented, thereby increasing the security and firmness of the clamping onto the roof rack.

According to yet another aspect of the invention, at least one cover strip is arranged to cover at least one section of said slit that is not covered by said housing. Thereby, the interior of the roof box can be prevented from being exposed to particles from the outside, such as for instance water, dirt or snow and ice. The contents of the roof box can thus be kept clean and dry during transport.

According to a further aspect of the invention, said cover strip is attached to said housing and to a cover housing in such a way that a part of said slit that is situated between said housing and said cover housing is covered by said cover strip and that said cover strip is further arranged in such a way that a movement of said housing along said slit causes said cover strip to be extended or contracted in such a way that the slit is kept covered by said cover strip. Thereby, even if the housing is moved along the slit, any parts of said slit that are not covered by the housing itself are continuously covered by the cover strip, giving an adaptable and reliable cover.

According to yet another aspect of the invention, said cover strip is a constant force spring. Thereby, the cover strip will when possible roll itself together into the cover housing without requiring an external force, thus always providing for a good covering of the slit even during and directly after the housing has been slid along said slit.

### BRIEF DESCRIPTION OF THE DRAWINGS

The invention will snow be described in more detail with reference to the appended drawings, wherein:
Fig. 1 shows a perspective view of a fastening assembly according to a preferred embodiment of the invention,
Fig. 2 shows an exploded view of a clamping assembly comprising a tightening device, locking device and clamping jaw of the fastening assembly of Fig. 1,
Fig. 3a shows an exploded view of the fastening assembly of Fig. 1,
Fig. 3b shows a perspective view of the fastening assembly of Fig. 3a from a short side of said assembly,
Fig. 4a shows a perspective view of the fastening assembly and a mounting assembly in a mounted stage,
Fig. 4b shows the fastening assembly and mounting assembly of Fig. 4a in an unmounted stage,
Fig. 5a-c show a perspective view of the fastening of the fastening assembly to a roof rack, and
Fig. 6a-c show a method for adjusting the placement of the fastening assembly according to the invention.

### DETAILED DESCRIPTION OF THE INVENTION

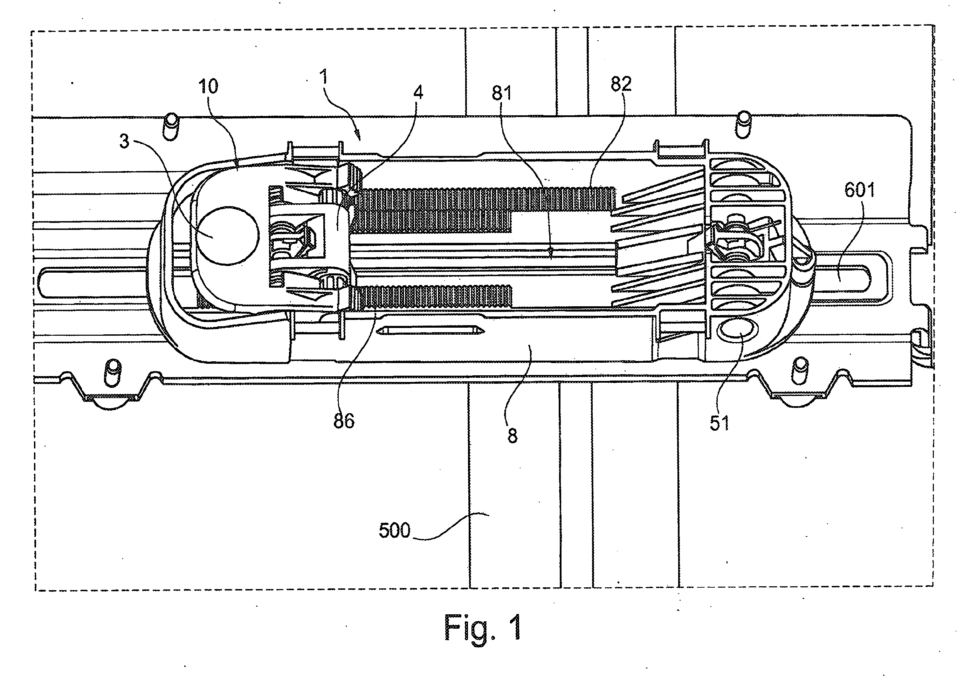

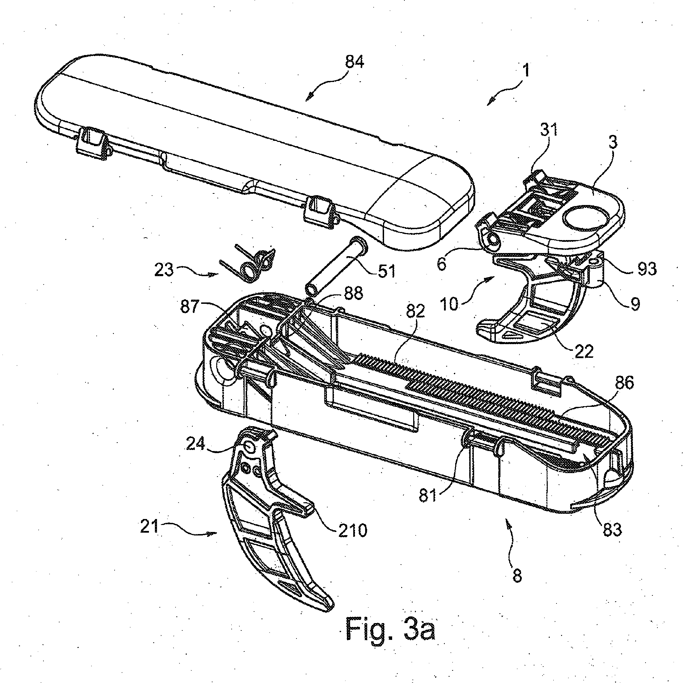

Fig. 1 -3 show the principal layout of a fastening assembly 1 with two clamping jaws 2 that are mounted in a housing 8. One of the clamping jaws 2 is a stationary jaw 21 that is mounted on an axis 51, as can be seen in Fig. 3a, and can pivot around said axis 51 but cannot move transversally in relation to the housing 8. The other clamping jaw 2 is a movable jaw 22 that is mounted on a clamping assembly 10, that in turn is slide ably arranged on the housing and can be slid towards the stationary jaw 21 in order to fasten an object, such as a roof rack, between the stationary jaw 21 and the movable jaw 22, in a manner that will be described in detail further below.

The clamping assembly 10 further comprises a tightening device 3 and a locking device 4 that are both arranged together with the movable jaw 22 on axes 52, 6. During operation of the fastening assembly 1, the clamping assembly 10 serves to gradually diminish the space between the movable jaw 22 and the stationary jaw 21 in order to provide a squeezing force to an object placed between the jaws 2, generally a transversal section of a roof rack. The locking device 4 serves to lock the clamping assembly 10 in a desired position, generally a position where the movable jaw 22 together with the stationary jaw 21 squeezes the roof rack as tightly as possible. By applying the locking device 4 in this position, a firm and secure fastening of the roof rack to the fastening assembly 1, and therethrough to the roof box, will be provided.

When desiring to loosen the clamping jaws 2, the locking device 4 is operated to release the lock, and the entire clamping assembly 10 can be slid away from the stationary jaw 21 along the housing 8.

Specifically, in Fig. 1 the housing 8 can be seen with the clamping assembly 10 at one end of said housing 8 and the axis 51 upon which the stationary jaw 21 is mounted at the other side. The housing itself is slide ably mounted inside a roof box 600 along its bottom surface, where an elongated slit 601 is provided. Said slit is wide enough to allow the jaws 2 to pass through it.

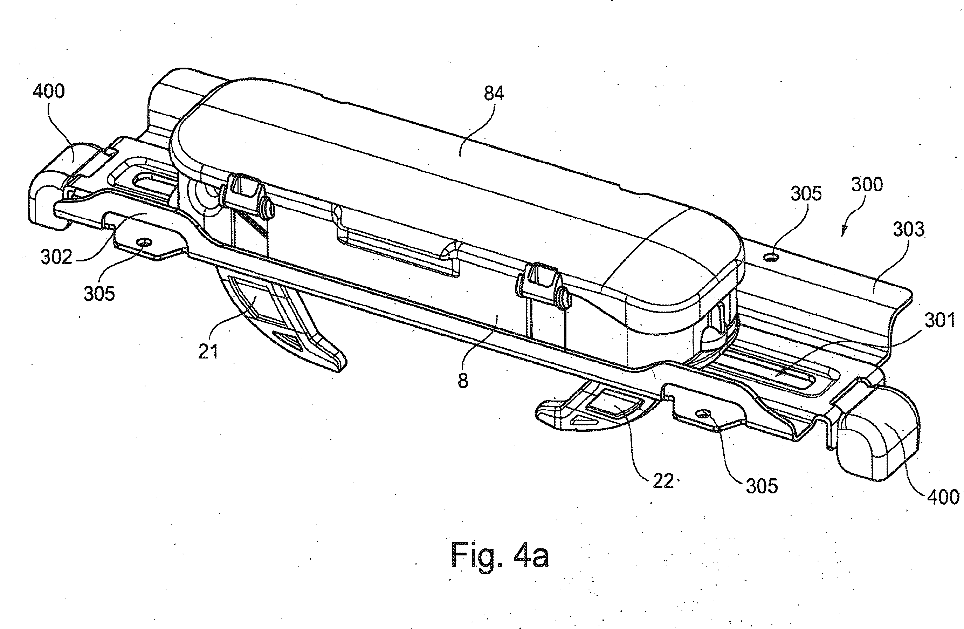

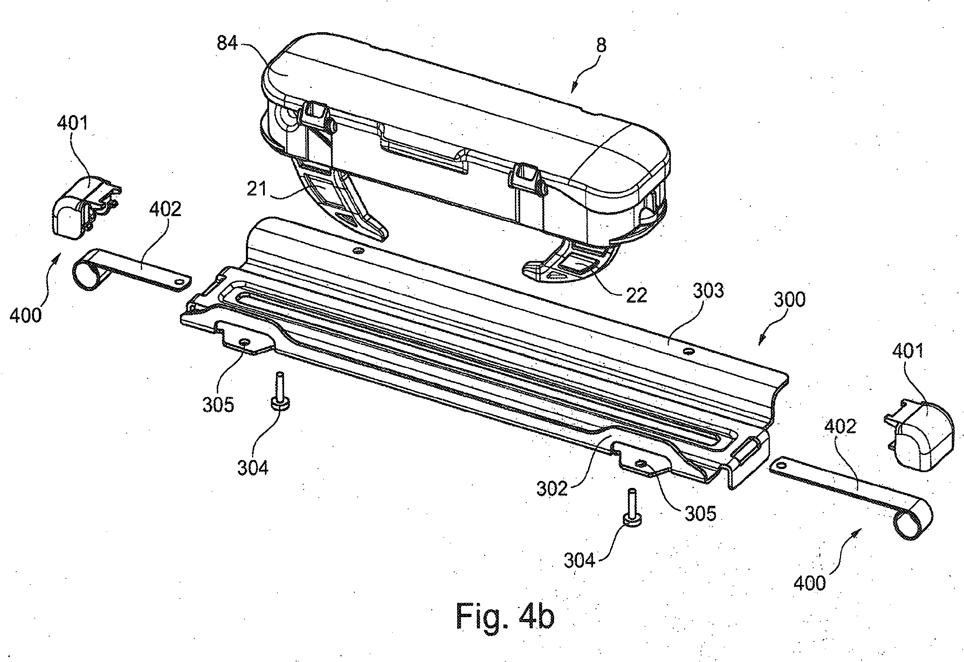

According to the preferred embodiment of the invention, a holder 300 (shown also in Fig. 4) is provided and firmly mounted directly on the bottom surface, said holder 300 also comprising an elongated slit 301 that corresponds to the slit through said bottom surface. The holder 300 further comprises raised sides 302, 303 that serve to guide the fastening assembly 1 and allow it.to slide along the slit 301.

Inside the housing 8, a first interaction section 82, in the form of a toothed rack 82 is provided along a bottom surface on both sides of the slit 81. This toothed rack 82 corresponds to a first interaction portion 31 in the form of a toothed section provided on the tightening device 3, having a substantial length L to enable fixing at roof racks 500 of different width, preferably L is at least 30 mm, more preferred 40-100 mm. Also provided along said bottom surface is a second toothed rack 86 of substantially the same length L that corresponds to a second interaction portion 41, also in the form of a toothed section provided on the locking device 4. The tightening device 3 also comprises a control element 32 for controlling the tightening and is mounted on a second axis 6 in such a way that the tightening device 3 can pivot around said axis 6. Said control element 32 can preferably be in the form of a lever section 32.

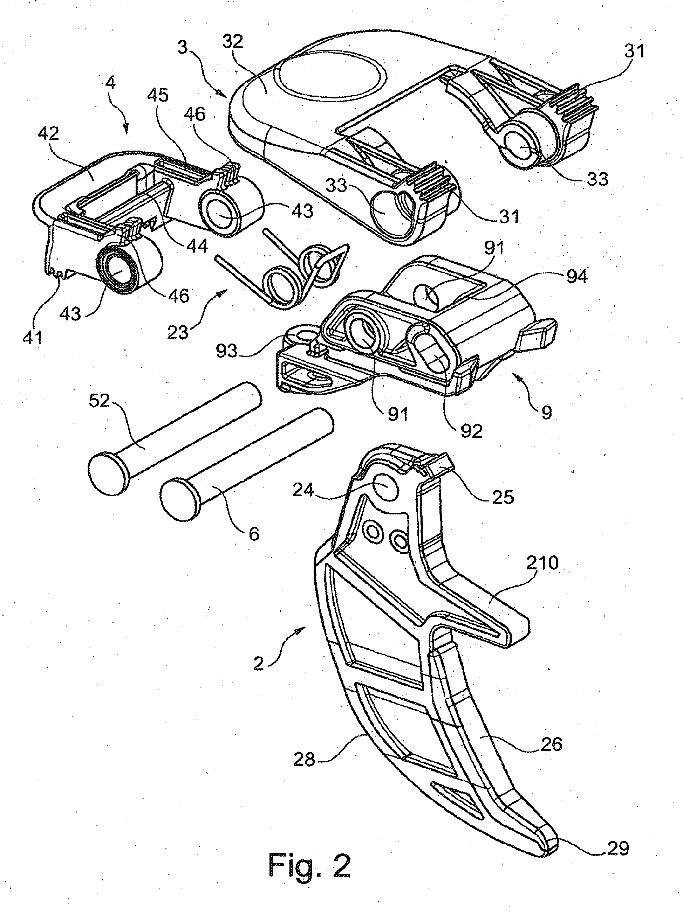

In Fig. 2, components of the clamping assembly 10 can be seen in an exploded view. These components comprise a holder body 9, the movable jaw 22, the locking device 4 and the tightening device 3, as well as a spring element 23, the axis 52 and a second axis 6. When mounting the clamping assembly 10, the movable jaw 22 and the spring element 23 are placed into the holder body 9 in such a way that an axis element 52 can be driven through a first opening 91 of the holder body 9 and also though an opening 24 on the movable jaw and through the spring element 23. The axis element 52 is also driven through corresponding openings 43 on the locking device 4, thus allowing these components (the movable jaw 22, the spring element 23, the holder body 9 and the locking device 4) to be fastened onto the same axis element 52 in such a way that each component can be pivoted around the axis 52 independently of the other.

The spring element 23, when mounted into the holder body 9, is arranged to abut against an abutment surface 94 of the holder body 9 and against the protrusion 25 of the movable jaw 22, and also on its other end to abut against a transversal surface 44 of the locking device 4. Thanks to this placement, the spring element 23 can serve to apply a spring force to the movable jaw 22 when this is pivoted, said spring force striving to return the movable jaw 22 to its original position by applying a pressure to the protrusion 25. By its other end, the spring element 23 strives to hold the locking device 4 down towards a second interaction section 86 in the form of an inner tooth rack 86, and in this way contributes to holding the locking device 4 in place. This inner tooth rack 86 is equipped with tooths that are placed at an angle (i.e. creating a self-locking function as is well known in ratchet mechanisms) with the bottom surface of the housing, in order to facilitate the locking into place of a second interaction portion 41 of the locking device 4, in that is prevents this second interaction portion 41 from accidentally sliding loose from the inner tooth rack 86, as is also described further below.

Also during mounting, the tightening device 3 is mounted onto the holder body 9 by inserting the second axis element 6 through a second opening 92 of the holder body 9 and also through openings 33 of the tightening device 3. Thereby, the tightening device 3 and the holder body 9 will also be mounted in such a way that they can each be pivoted around the second axis 6 independently of each other. The second opening 92 is of an oval cross-section (extending in a sharp angle, preferably about 40-50°, in relation to a direction of movement of the clamping assembly), thereby allowing the second axis 6 to slide/move inside the second opening 92. Thanks to this, the lever 32 can be operated in a very beneficial way, being rotated around the second axis 6 but also slid together with this second axis 6 inside the second opening 92. Thereby, a pumping movement that allows the first interaction portion 31 to interact with the outer tooth rack 82 to first move the clamping assembly 10 forward can be created, but when the lever 32 is pivoted further, the teeth 31 will create a force that pushes the shaft 6 upwards in the oval opening 92, to allow the lever 32 along with the first interaction portion 31 to pivot the other way, i.e. to move back to a position before this interaction began without engaging the outer tooth rack 82. Thus, a tightening process is enabled where each pumping movement of the lever 32 makes the clamping assembly 10 move along the outer tooth rack 82 in a direction towards the stationary jaw 21 and allows the clamping assembly 10 to be held still by the locking device 4 as the lever 32 is returned to its original position, ready to pump again.

Fig. 3a shows the mounting of components of the fastening assembly 1. Into the housing, the stationary jaw 21 is placed onto an axis 51 along with a spring element 23 in such a way that the stationary jaw 21 can pivot around said axis 51 in relation to the housing 8, the spring element 23 via protrusion 25 urging the jaw 22 to pivot clockwise as shown in Fig. 2. The clamping assembly 10 is placed into the housing 8 at a slit opening 83, where the movable jaw 22 and a section of the holder body 9 can extend through said slit opening 83 while the rest of the clamping assembly 10 do not. In particular, a support surface 93 is allowed to be placed through said slit opening 83 and serves as a guide for the motion of the clamping assembly 10 along the slit 81, while at the same time preventing the clamping assembly 10 to be moved in a transversal direction, i.e. to be removed from the slit 81, at any position besides that where the slit opening 83 is located. The clamping assembly 10 can thus be slid along the slit 81 towards the stationary jaw 21 and the axis 51.

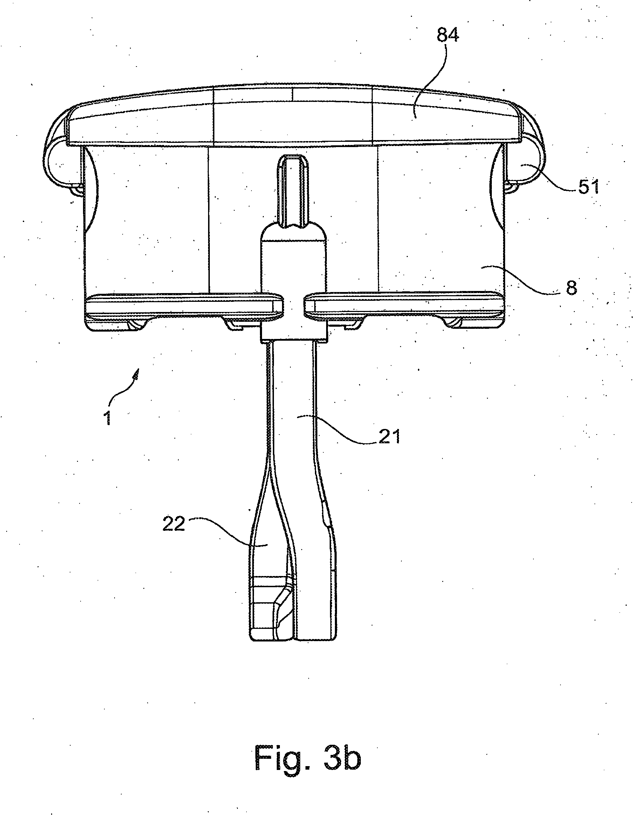

In Fig. 3b, the fastening device 1 is shown from a short side, with the stationary jaw 21 being closest to the observer. In conjunction with the housing 8, its lid 84 and the axis 51 that holds the stationary jaw 21 can be seen, and behind said stationary jaw 21 the movable jaw 22 can partly be seen. The Figure serves to illustrate a beneficial shape of the jaws 21, 22, where the end portion 29 is arranged to extend slightly to the side and thus allow the opposing jaws 21, 22 to overlap. Thanks to this, the fastening assembly 1 can be used for gripping roof racks 500 of many different shapes and sizes, including very small and thin roof racks 500, and still achieve a tight and secure grip. This design aspect, where the jaws 21, 22 are arranged symmetrically with overlapping end portions 29 while also mounted in a linear fashion so that they can be moved directly towards each other in the same plane and still allow said end portions 29 to overlap without preventing the gripping of thin roof racks, can advantageously be used with other systems than that of the present invention and may be the subject of a divisional application.

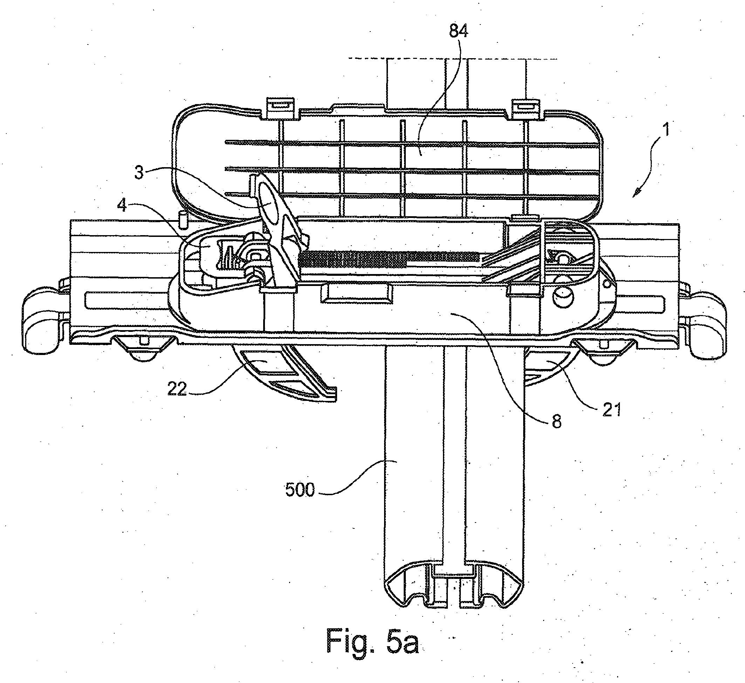

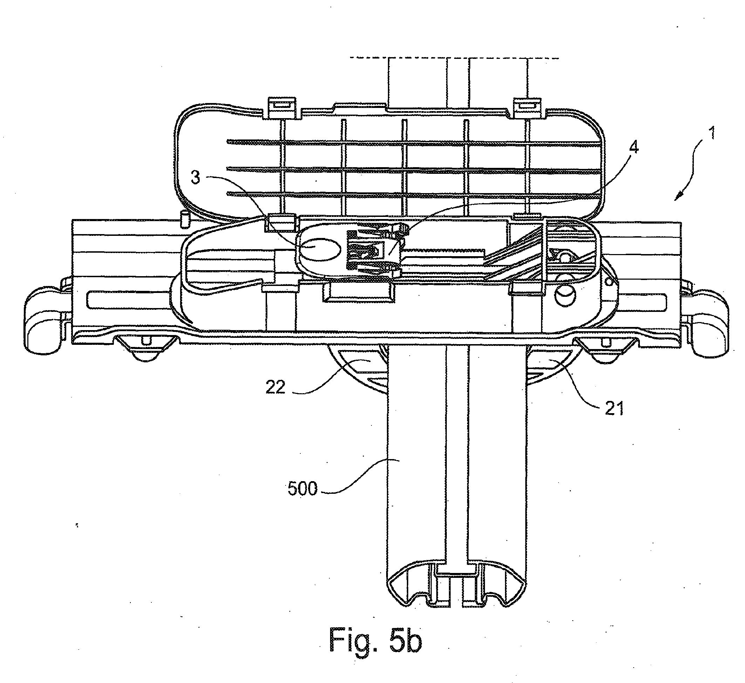

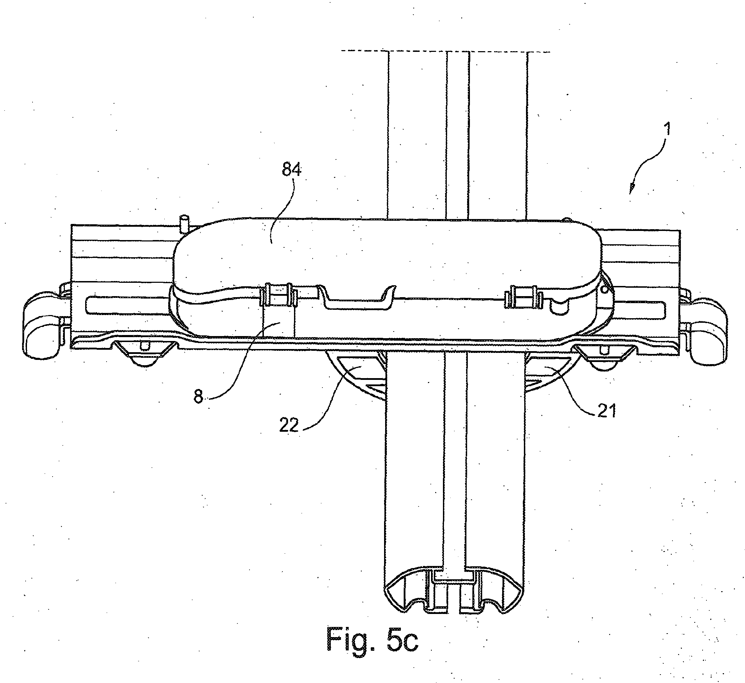

The tightening and removal of the fastening assembly 1 will now be described with reference to Fig. 5a-5c.

In order to activate the tightening provided by the tightening device 3, the lever 32 is raised so that the first interaction portion 31 can interact with the tooth rack 82 and the clamping assembly 10 is slid along the slit 81 a distance that corresponds to a length of the first interaction portion 31. After the lever 32 has thus been raised, the locking device 4 is lowered towards the tooth rack 86 in such a way that the second interaction portion 41 can interact with the inner tooth rack 86 for preventing the clamping assembly 10 from moving along the slit 81. After the clamping assembly 10 has thus been locked into a particular position, the lever can, thanks to the shape of the hole 92, be lowered without causing that position to be altered and can again be raised in order to move the clamping assembly 10 a new distance by the interaction of the first interaction portion 31 and the tooth rack 82. After each such step, the locking device 3 provides a lock that securely prevents the sliding backwards of the clamping assembly 10, and after a position has been reached where no, further tightening is possible, i.e. where the movable jaw 22 and the stationary jaw 21 together are firmly pressed towards an object such as the roof rack, the locking device 4 can in the same way as for each step along the way provide a locking function that prevents the movable jaw 22 from sliding away from the pressed object. When that position has been reached, the lever 32 of the tightening device 3 can be fastened onto the locking lever 42 of the locking device 4 and thereby provide an additional security in preventing the second interaction portion 41 from being involuntarily lifted from its locking position. The fastening is effected by the lever 32 being pushed down towards the locking device 4 until it is snapped into a lock with a locking portions 45 and locking pins 46 that are placed on the upmost side of the locking device 4. Thanks to this snapping lock, an accidental removal of the lever 32 from the locking device 4 can be avoided. The tightening device 3 also has a friction element where the holes 33 are mounted onto the first axis 52 with the holes 91 of the holder body 9. Said friction element can be integrated with a wall of the openings 33 or can be a separate element, and serves to increase the friction when operating the lever 32 during the first part of a movement from a locked position and up. Thanks to this, an accidental lifting of the lever 32 can be prevented, and together with the locking function provided by the locking portions 45 and locking pins 46 that serves to lock the tightening device 3 to the locking device 4 and the lid 84 that can be closed over the fastening assembly, any risk of the grip of the jaws 21, 22 being loosened can be prevented in an efficient and reliable way.

The housing 8 is also equipped with a lid 84 that can be used to cover the components inside the housing 8 and thereby prevent any action that could tamper with the locking of the clamping assembly 10 and thereby the reliability of the hold around the roof rack

When a removal of the roof box from the roof rack is desired, the lever 32 and locking lever 42 can in turn be lifted, and as soon as the locking lever 42 has been moved enough to free the second interaction portion 41 from the toothed rack 86, the clamping assembly 10 is free to slide along the slit 81 and thereby free the pressed object from the space between the jaws 21, 22.

The tightening device 3 and locking device 4 are in this embodiment integrated in the clamping device, arranged to move together in relation to the housing 8. It would also be possible to arrange for the tightening and/or locking devices 3, 4 to remain stationary while the first interaction section 82, i.e. the tooth rack 82, is arranged to move together with the movable jaw 22. The general principle underling the tightening process will remain the same, as long as one of the interacting elements, i.e. the control element 32 and the first interaction section 82, is stationary in relation to the movable jaw 22. The axis 52. around which the movable jaw 22 is arranged to pivot thus serves as a fulcrum and can also perform a linear movement towards the stationary jaw 21.

It is advantageous that only one of the jaws 21, 22 is movable in relation to the other jaw, since this increases the precision in the mounting process and renders stability to the fastening assembly 1, but it would also be possible to allow both jaws 21, 22 to move. The control element 32 could then be arranged to control the movement of both jaws.

Fig. 4a and 4b shows the housing 8 in a closed position with the lid 84 lowered to prevent any disturbance of the contents of the housing 8. The housing is placed into the holder 300 between the edges 302, 303 and the jaws 21, 22 have been inserted into the slit 301 of the holder. At either end of the slit 301, cover holders 400 are mounted, said holders 400 comprise a cover housing 401 where a cover strip 402 is kept rolled. This cover strip 402 is attached to the nearest end of the housing 8 in such a way that a sliding of the housing 8 along the slit 301 in the holder 300 will cause the cover strip 402 to be extended from the cover housing 401 or pushed back into said cover housing 401. Since the holder 8 has such cover strips 402 attached at both ends, the parts of the slit 301 that are not covered by the housing 8 itself will be covered by one of the two cover strips 402, and thereby any moisture, dirt or particles can be kept out of the roof box into which the holder 300 is mounted. It is beneficial if the cover strip 402 comprises a constant force spring, that strives towards a rolled up position inside the cover housing 401. Thereby, whenever the housing 8 is slid along the slit 81, the cover strip 402 will of itself be rolled up or unrolled as required and still keep the slit 81 covered and prevent dirt or moisture from entering through said slit 81. This design aspect, with the cover strip 402 being conveniently rolled up inside the cover housing 401 and also serving to cover the slit 301, can advantageously be used with other systems than that of the present invention, and may be the subject of a divisional application.

The cover strips 402 can be made from a metal but can also be of a softer material such as rubber or a plastic sheet, for instance. If an elastic material is used, the extension and contraction of the cover strips 402 can be performed without the need for a rolling of the cover strip 402.

As can be seen in Fig. 4b, the holder 300 can be attached to the inside of a roof box by the use of fastening agents such as nails 304 that fit into holes 305, for instance. Many other ways of attaching the holder to the inside or outside of the roof box can also be imagined, and the holder could also be an integrated part of the roof box 600.

Fig. 4a shows also the relation between the jaws 2 when the housing 8 is mounted into the holder 300. Each of the jaws 21, 22 is of a shape that serves to embrace an object placed between them, since the jaws 21, 22 end in an elongated portion that extends towards the other jaw 22, 21. A surface of each jaw 21, 22 that faces the other jaw 22, 21, i.e. an inside 26 and 25, respectively, is in the preferred embodiment coated with an elastic material with a high friction coefficient, such as a rubber material, for instance. An outside 28, 17, respectively, can be seen as a side facing away from the other jaw 22, 21, and is generally sloped in a convex shape from the outermost part closest to each end and on to the point where it meets the inside 26, 25.

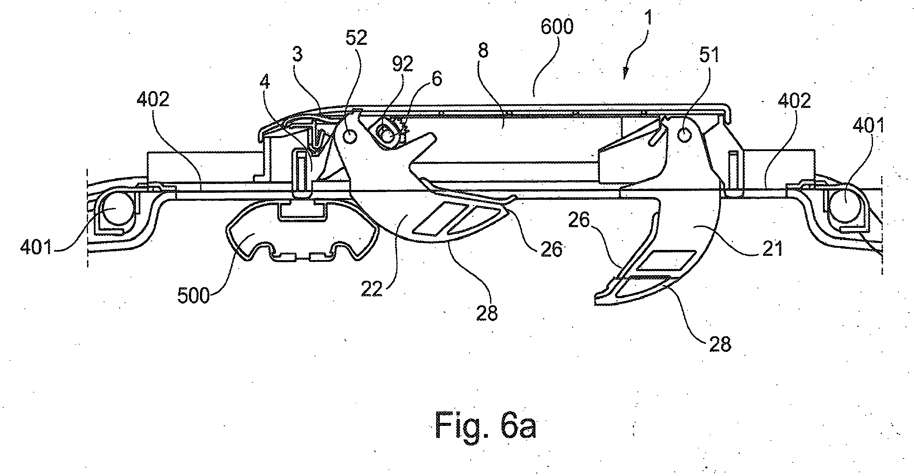

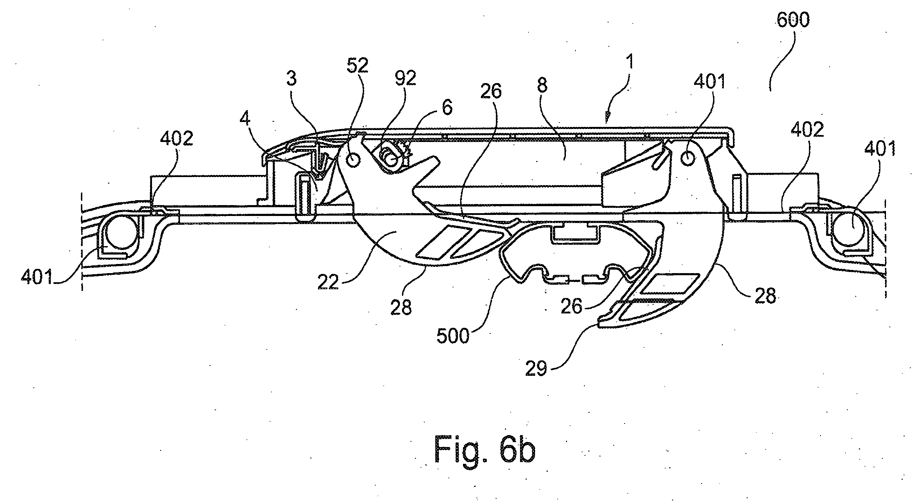

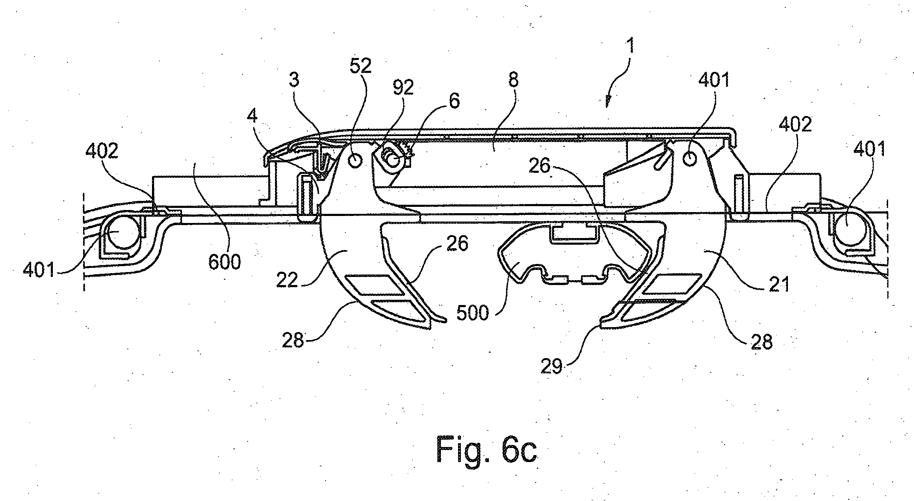

In Fig. 6a-6c a way of adjusting the placement of the fastening assembly 1 over a roof rack can be seen. Fig. 6a shows a position that can be reached after the roof box has been placed onto the roof rack, before any adjustments have taken place. As can be seen, the stationary jaw 21 is on a suitable side of a roof rack 500 but the movable jaw 22 is not, since the jaws are on the same side of said roof rack 500. Thanks to the pivoting function, the movable jaw 22 is swung upwards towards the slit 81. In Fig. 6b, the housing 8 has been slid further to the left, allowing the movable jaw 22 to pivot almost completely into the housing 8 by way of the slit 81 in order to allow a passage over the roof rack 500. In Fig. 6c, the roof rack 500 has been passed and the movable jaw 22 is once again in its normal position, thanks to the spring element 23 as has been described above. Now, the roof rack 500 is placed between the jaws 21, 22 and a tightening of the jaws 21, 22 towards the roof rack 500 can begin. Thanks to the fact that both jaws 21, 22 are equipped with a spring element 23, the adjustment with a jaw folded towards the housing 8 can be performed regardless of which jaw 21, 22 would need adjusting.

The pivoting function of the movable jaw 22 is a functionality that advantageously can be used independently or with other systems than the fastening device 1 of the present invention and that may be the subject of a divisional application.

As has been previously mentioned, the housing 8 can be slid freely along the slit 301 in the holder 300. Once the jaws have been tightened around a roof rack 500, however, the squeezing around said roof rack 500 will generate a holding force that fixates the housing 8 and squeezes the roof box towards the roof rack 500, thereby enabling a firm and secure hold. In a preferred embodiment, a surface of the holder 300 can be coated with a friction enhancing substance, such as a rubber or a plastic material, in order to hold the housing 8 more securely on the holder 300 when it is not deliberately adjusted in relation to said holder 300.

As can be seen in Fig. 3a, for instance, each of the jaws 21, 22 comprises a protruding section 210 that after mounting of the jaws 21, 22 into the housing and the clamping assembly 10, respectively, will protrude along the slit 81. Thanks to these protruding sections 210, a further covering of the slit 81 underneath the housing 8 will be achieved, thus significantly decreasing the risk of dirt or moisture entering the housing. The presence of such undesired substances could otherwise interfere with the operation of the fastening assembly 1 and for instance make the interaction of the first and second interacting portions 31, 41 and the first and second interaction sections 82, 86, i.e. the tooth racks 82, 86.

The invention is not to be seen as limited by the preferred embodiments described above, but can be varied within the scope of the appended claims, as will become readily apparent to the person skilled in the art. For instance, the fastening assembly can be suitable for securing other objects than roof boxes to roof racks, such as for securing a roof rack itself to a vehicle, for instance. The different components of the invention can be integrated to form larger units or separated into more parts that are joined together in order to achieve the results described herein. Further it is evident that the interacting elements, e.g. 31/82, can be of other constructions than teeth/teeth, so that other kinds of interacting elements may be used, e.g. other formlocking elements or elements interacting by friction.

## Claims

1. Fastening assembly (1) for mounting a roof box (600) onto a roof rack (500) of a vehicle, said fastening assembly (1) comprising a housing (8) arranged to be mounted on a roof box (600), said housing (8) comprising clamping means (2) for clamping said roof box (600) onto said roof rack (500), said clamping means (2) comprising at least two jaws (21, 22) wherein at least one of said jaws (22) is arranged to be movable in relation to another jaw (21), **characterised in that** said housing (8) comprises a first interaction section (82) extending a substantial distance in parallel with a long side of said housing (8), and a clamping assembly (10) with tightening means (3) arranged at one end of said housing (8), said tightening means (3) comprising a control element (32) that constitutes a lever (32) comprising a first interacting portion (31) arranged to interact with said first interaction section (82) in the housing (8) when operating said control element (32), to move the whole body of the movable jaw (22) towards the other jaw (21).

2. Fastening assembly according to claim 1, wherein said housing (8) is mounted on a holder (300) of said roof box (600) and arranged to be movable in relation to said roof box (600) by means of sliding along said holder (300).

3. Fastening assembly according to claim 2, wherein said holder (300) is a separate component that is arranged to be fixedly mounted on said roof box (600).

4. Fastening assembly according to claim 1, **characterised in that** one jaw (22) is pivotally mounted about an axis (52) that is fixedly arranged in said clamping assembly (10).

5. Fastening assembly according to claim 1, wherein one jaw (21) is pivotally mounted about an axis (51) that is fixedly arranged in said housing (8).

6. Fastening assembly according to any of the previous claims, wherein each of said at least two jaws (21, 22) has an inner surface (26) that is substantially concavely shaped.

7. Fastening assembly according to any of the previous claims, wherein at least one of said jaws (21, 22) is of a shape that is substantially planar and has an end portion (29) arranged to extend to allow an overlap of the ends (29) of two opposing jaws (21, 22).

8. Fastening assembly according to any of the previous claims, wherein said fastening assembly (1) further comprises locking means (4) for locking said clamping assembly (10) in order to prevent a movement of said clamping assembly (10) in relation to said housing (8), and wherein said housing (8) comprises a second interaction section (86) and said locking means (4) comprises a second interacting portion (41) and where said second interaction section (86) and second interacting portion (41) are arranged to interact in such a way that a locking of said clamping assembly (10) is created in one direction, thereby preventing an unclamping movement of said clamping assembly (10) in relation to said housing (8).

9. Fastening assembly according to any of the previous claims, wherein said holder (300) comprises a slit (81) along which the housing (8) is mounted, and wherein said movable clamping assembly (10) comprises a holder body (9) arranged with a support portion (95) arranged to allow said holder body (9) to slide along said slit (81) and also hindering said assembly (10) to move in a transversal direction in relation to said slit (81).

10. Fastening assembly according to claim 9, wherein at least one cover strip (402) is arranged to cover at least one section of said slit (81) that is not covered by said housing (8), and wherein said cover strip (402) is attached to said housing (8) and to a cover housing (401) in such a way that a part of said slit (81) that is situated between said housing (8) and said cover housing (401) is covered by said cover strip (402) and that said cover strip (402) is further arranged in such a way that a movement of said housing (8) along said slit (81) causes said cover strip (402) to be extended or contracted in such a way that the slit (81) is kept covered by said cover strip (402).

11. Method for mounting a roof box (600) onto a roof rack (500) of a vehicle, comprising the steps of
a) placing a roof box (600) onto a roof rack (500),
b) adjusting a fastening assembly (1) by sliding a housing (8) of said fastening assembly (1) along a holder (300) of said roof box (600) until said housing (8) is placed in such a way that said roof rack (500) is situated between two jaws (21, 22) of said fastening assembly (1)
c) adjusting a clamping assembly (10) in such a way that at least one of said jaws (22) is moved towards the other jaw (21) until a position is reached where said roof rack (500) is held tightly between them, and
d) locking said clamping assembly (10) in the position of step c),
and **characterised by** the adjusting of step c) being performed by operating a control element (32) of a tightening device (3), constituting a lever (32) comprising a first interaction portion (31) that interacts with a first interaction section (82) in the housing (8), to make said clamping assembly (10) comprising said movable jaw (22) move the whole body of the jaw (22) towards the other jaw (21).

12. Method according to claim 11, wherein at least one of said jaws (21, 22) can pivot in relation to said housing (8).

13. Method according to any of claims 11 or 12, wherein the locking of step d) is performed by a second interaction portion (41) of a locking device (4) engaging a second interaction section (86) that is stationary with respect to the housing (8).

14. Method according to any of the claims 11-13, wherein said clamping assembly (10) can slide along a slit (81) in the housing (8) but is prevented from moving in a transversal direction in relation to said slit (81).

## Patentansprüche

1. Befestigungsanordnung (1) zum Anbringen einer Dachbox (600) auf einen Dachträger (500) eines Fahrzeugs, wobei die Befestigungsanordnung (1) ein Gehäuse (8) umfasst, das eingerichtet ist, an einer Dachbox (600) angebracht zu werden, wobei das Gehäuse (8) Klemmmittel (2) zum Klemmen der Dachbox (600) auf den Dachträger (500) umfasst, wobei das Klemmmittel (2) mindestens zwei Backen (21, 22) umfasst, wobei mindestens eine der Backen (22) dazu eingerichtet ist, in Bezug auf eine andere Backe (21) beweglich zu sein, **dadurch gekennzeichnet, dass** das Gehäuse (8) einen ersten Interaktionsbereich (82) umfasst, der sich eine wesentliche Strecke parallel zu einer Längsseite des Gehäuses (8) erstreckt, und eine Klemmanordnung (10) mit Festziehmitteln (3), die an einem Ende des Gehäuses (8) angeordnet ist, wobei das Festziehmittel (3) ein Steuerelement (32) umfasst, das einen Hebel (32) darstellt, der einen ersten Interaktionsabschnitt (31) umfasst, der eingerichtet ist, mit dem ersten Interaktionsbereich (82) in dem Gehäuse (8) zusammenzuwirken, wenn das Steuerelement (32) betätigt wird, so dass der ganze Körper der beweglichen Backe (22) auf die andere Backe (21) zu bewegt wird.

2. Befestigungsanordnung nach Anspruch 1, wobei das Gehäuse (8) auf einem Halter (300) der Dachbox (600) angebracht ist und dazu eingerichtet ist, in Bezug auf die Dachbox (600) mittels eines Verschiebens entlang des Halters (300) bewegbar zu sein.

3. Befestigungsanordnung nach Anspruch 2, wobei der Halter (300) eine separate Komponente ist, die dazu eingerichtet ist, fest an der Dachbox (600) angebracht zu werden.

4. Befestigungsanordnung nach Anspruch 1, **dadurch gekennzeichnet, dass** eine Backe (22) schwenkbar um eine Achse (52) angebracht ist, die fest in der Klemmanordnung (10) angeordnet ist.

5. Befestigungsanordnung nach Anspruch 1, wobei eine Backe (21) schwenkbar um eine Achse (51) angebracht ist, die fest in dem Gehäuse (8) angeordnet ist.

6. Befestigungsanordnung nach einem der vorhergehenden Ansprüche, wobei jede der mindestens zwei Backen (21, 22) eine innere Oberfläche (26) aufweist, die im wesentlichen konkav geformt ist.

7. Befestigungsanordnung nach einem der vorhergehenden Ansprüche, wobei mindestens eine der Backen (21, 22) eine im wesentlichen flache Form aufweist und einen Endabschnitt (29) aufweist, der sich so erstreckend angeordnet ist, dass er eine Überlappung der Enden (29) von zwei gegenüberliegenden Backen (21, 22) ermöglicht.

8. Befestigungsanordnung nach einem der vorhergehenden Ansprüche, wobei die Befestigungsanordnung (1) weiter Verriegelungsmittel (4) zum Verriegeln der Klemmanordnung (10) aufweist, um eine Bewegung der Klemmanordnung (10) in Bezug auf das Gehäuse (8) zu verhindern, und wobei das Gehäuse (8) einen zweiten Interaktionsbereich (86) umfasst und wobei das Verriegelungsmittel (4) einen zweiten Interaktionsabschnitt (41) umfasst, und wobei der zweite Interaktionsbereich (86) und der zweite Interaktionsabschnitt (41) so eingerichtet sind, dass sie so zusammen wirken, dass ein Verriegeln der Klemmanordnung (10) in eine Richtung bewirkt wird, so dass eine Klemmlösebewegung der Klemmanordnung (10) in Bezug auf das Gehäuse (8) verhindert wird.

9. Befestigungsanordnung nach einem der vorhergehenden Ansprüche, wobei der Halter (300) einen Schlitz (81) umfasst, entlang welchem das Gehäuse (8) angebracht ist, und wobei die bewegliche Klemmanordnung (10) einen Halterkörper (9) umfasst, der mit einem Stützabschnitt (95) versehen ist, der eingerichtet ist, um ein Verschieben des Halterkörpers (9) entlang des Schlitzes (81) zu ermöglichen und ebenso zu verhindern, dass die Anordnung (10) sich in einer Richtung quer zu dem Schlitz (81) bewegt.

10. Befestigungsanordnung nach Anspruch 9, wobei mindestens ein Abdeckstreifen (402) angeordnet ist, um mindestens einen Bereich des Schlitzes (81) abzudecken, der nicht von dem Gehäuse (8) abgedeckt wird, und wobei der Abdeckstreifen (402) an dem Gehäuse (8) und an einem Abdeckgehäuse (401) so angebracht ist, dass ein Teil des Schlitzes (81), der sich zwischen dem Gehäuse (8) und dem Abdeckgehäuse (401) befindet, durch den Abdeckstreifen (402) abgedeckt wird, und wobei der Abdeckstreifen (402) weiter so angeordnet ist, dass eine Bewegung des Gehäuses (8) entlang des Schlitzes (81) bewirkt, dass der Abdeckstreifen (402) so erweitert oder zusammengezogen wird, dass der Schlitz (81) durch den Abdeckstreifen (402) abgedeckt bleibt.

11. Verfahren zum Anbringen einer Dachbox (600) auf einem Dachträger (500) eines Fahrzeugs, umfassend die Schritte
a) Platzieren einer Dachbox (600) auf einem Dachträger (500),
b) Anpassen einer Befestigungsanordnung (1) durch Verschieben eines Gehäuses (8) der Befestigungsanordnung (1) entlang eines Halters (300) der Dachbox (600), bis das Gehäuse (8) so platziert ist, dass der Dachträger (500) sich zwischen zwei Backen (21, 22) der Befestigungsanordnung (1) befindet;
c) Anpassen einer Klemmanordnung (10) so, dass mindestens eine der Backen (22) in Richtung der anderen Backe (21) bewegt wird, bis eine Position erreicht ist, in der der Dachträger (500) fest zwischen diesen gehalten wird, und
d) Verriegeln der Klemmanordnung (10) in der Position aus Schritt c),
und **gekennzeichnet dadurch, dass** das Anpassen in Schritt c) ausgeführt wird, indem ein Steuerelement (32) einer Festziehvorrichtung (3) betätigt wird, die einen Hebel (32) darstellt, der einen ersten Interaktionsabschnitt (31) umfasst, der mit einem ersten Interaktionsbereich (82) in dem Gehäuse (8) zusammen wirkt, um zu bewirken, dass die Klemmanordnung (10), die die bewegliche Backe (22) umfasst, den ganzen Körper der Backe (22) in Richtung der anderen Backe (21) bewegt.

12. Verfahren nach Anspruch 11, wobei mindestens eine der Backen (21, 22) in Bezug auf das Gehäuse (8) schwenkbar ist.

13. Verfahren nach einem der Ansprüche 11 oder 12, wobei das Verriegeln aus Schritt (d) ausgeführt wird von einem zweiten Interaktionsabschnitt (41) einer Verriegelungsvorrichtung (4), die mit einem zweiten Interaktionsbereich (86) eingreift, der in Bezug auf das Gehäuse (8) feststehend ist.

14. Verfahren nach einem der Ansprüche 11 bis 13, wobei die Klemmanordnung (10) entlang eines Schlitzes (81) in dem Gehäuse (8) verschiebbar ist, aber daran gehindert wird, sich in einer Richtung quer zu dem Schlitz (81) zu bewegen.

## Revendications

1. Ensemble de fixation (1) pour le montage d'un coffre de toit (600) sur une galerie de toit (500) d'un véhicule, ledit ensemble de fixation (1) comprenant un boîtier (8) agencé pour être monté sur un coffre de toit (600), ledit boîtier (8) comprenant des moyens de serrage (2) pour serrer ledit coffre de toit (600) sur ladite galerie de toit (500), lesdits moyens de serrage (2) comprenant au moins deux mâchoires (21, 22), au moins une desdites mâchoires (22) étant agencée pour être mobile par rapport à l'autre mâchoire (21), **caractérisé en ce que** ledit boîtier (8) comprend une première portion d'interaction (82) s'étendant sur une distance substantielle parallèlement à un grand côté dudit boîtier (8), et un ensemble de serrage (10) avec des moyens de serrage (3) disposés à une extrémité dudit boîtier (8), lesdits moyens de serrage (3) comprenant un organe de commande (32) qui constitue un levier (32) comprenant une première partie d'interaction (31) agencée pour interagir avec ladite première portion d'interaction (82) dans le boîtier (8) lors de l'actionnement dudit organe de commande (32), pour déplacer l'ensemble du corps de la mâchoire mobile (22) en direction de l'autre mâchoire (21).

2. Ensemble de fixation selon la revendication 1, dans lequel ledit boîtier (8) est monté sur un support (300) dudit coffre de toit (600) et agencé pour être mobile par rapport audit coffre de toit (600) au moyen d'un coulissement le long dudit support (300).

3. Ensemble de fixation selon la revendication 2, dans lequel ledit support (300) est un composant séparé qui est agencé pour être monté de manière fixe sur ledit coffre de toit (600).

4. Ensemble de fixation selon la revendication 1, **caractérisé en ce qu'**une mâchoire (22) est montée de façon pivotante autour d'un axe (52) qui est agencé de manière fixe dans ledit ensemble de serrage (10).

5. Ensemble de fixation selon la revendication 1, dans lequel une mâchoire (21) est montée de façon pivotante autour d'un axe (51) qui est agencé de manière fixe dans ledit boîtier (8).

6. Ensemble de fixation selon l'une quelconque des revendications précédentes, dans lequel chacune desdites au moins deux mâchoires (21, 22) présente une surface intérieure (26) qui est de forme sensiblement concave.

7. Ensemble de fixation selon l'une quelconque des revendications précédentes, dans lequel au moins l'une desdites mâchoires (21, 22) a une forme qui est sensiblement plane et comporte une partie d'extrémité (29) agencée de façon à s'étendre pour permettre un chevauchement des extrémités (29) des deux mâchoires opposées (21, 22).

8. Ensemble de fixation selon l'une quelconque des revendications précédentes, dans lequel ledit ensemble de fixation (1) comprend en outre des moyens de verrouillage (4) pour verrouiller ledit ensemble de serrage (10) afin d'empêcher un mouvement dudit ensemble de serrage (10) par rapport audit boîtier (8), et dans lequel ledit boîtier (8) comprend une deuxième portion d'interaction (86) et lesdits moyens de verrouillage (4) comprennent une deuxième portion d'interaction (41), ladite deuxième portion d'interaction (86) et ladite deuxième portion d'interaction (41) étant agencées pour interagir de telle sorte qu'une fermeture dudit ensemble de serrage (10) est créée dans une direction, empêchant de ce fait un mouvement de desserrage dudit ensemble de serrage (10) par rapport audit boîtier (8).

9. Ensemble de fixation selon l'une quelconque des revendications précédentes, dans lequel ledit support (300) comprend une fente (81) le long de laquelle le boîtier (8) est monté, ledit ensemble de serrage mobile (10) comprenant un corps de support (9) agencé avec une partie de support (95) agencée pour permettre audit corps de support (9) de coulisser le long de ladite fente (81) et pour également empêcher ledit ensemble (10) de se déplacer dans une direction transversale par rapport à ladite fente (81).

10. Ensemble de fixation selon la revendication 9, dans lequel au moins une bande de recouvrement (402) est agencée pour recouvrir au moins une partie de ladite fente (81) qui n'est pas recouverte par ledit boîtier (8), et dans lequel ladite bande de recouvrement (402) est fixée audit boîtier (8) et à un boîtier de recouvrement (401) de telle sorte qu'une partie de ladite fente (81) située entre ledit boîtier (8) et ledit boîtier de recouvrement (401) est recouverte par ladite bande de recouvrement (402) et de telle sorte que ladite bande de recouvrement (402) soit en outre agencée de manière à ce qu'un mouvement dudit boîtier (8) le long de ladite fente (81) amène ladite bande de recouvrement (402) à être étendue ou contractée de telle manière que la fente (81) soit maintenue recouverte par ladite bande de recouvrement (402).

11. Procédé de montage d'un coffre de toit (600) sur une galerie de toit (500) d'un véhicule, comprenant les étapes consistant à
a) placer un coffre de toit (600) sur une galerie de toit (500),
b) régler un ensemble de fxation (1) en faisant coulisser un boîtier (8) dudit ensemble de fixation (1) le long d'un support (300) dudit coffre de toit (600) jusqu'à ce que ledit boîtier (8) soit placé de telle manière que ladite galerie de toit (500) soit placée entre deux mâchoires (21, 22) dudit ensemble de fixation (1)
c) régler un ensemble de serrage (10) d'une telle manière qu'au moins une desdites mâchoires (22) soit déplacée vers l'autre mâchoire (21) jusqu'à ce qu'une position soit atteinte dans laquelle ladite galerie de toit (500) est maintenue fermement entre eux, et
d) verrouiller ledit ensemble de serrage (10) dans la position de l'étape c),
et **caractérisé par le fait que** le réglage de l'étape c) est exécuté en actionnant un organe de commande (32) d'un dispositif de serrage (3), constituant un levier (32) comprenant une première portion d'interaction (31) qui interagit avec une première partie d'interaction (82) dans le boîtier (8), pour amener ledit ensemble de serrage (10) comprenant ladite mâchoire mobile (22) à déplacer l'ensemble du corps de la mâchoire (22) en direction de l'autre mâchoire (21).

12. Procédé selon la revendication 11, dans lequel au moins une desdites mâchoires (21, 22) peut pivoter par rapport audit boîtier (8).

13. Procédé selon l'une quelconque des revendications 11 ou 12, dans lequel le verrouillage de l'étape d) est effectué par une deuxième portion d'interaction (41) d'un dispositif de verrouillage (4) venant en engagement avec une deuxième partie d'interaction (86) qui est fixe par rapport au boîtier (8).

14. Procédé selon l'une quelconque des revendications 11 à 13, dans lequel ledit ensemble (10) de serrage peut coulisser le long d'une fente (81) dans le boîtier (8), mais est empêché de se déplacer dans une direction transversale par rapport à ladite fente (81).
